(19) Europäisches Patentamt
European Patent Office
Office européen des brevets

(11) **EP 1 446 313 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(21) Anmeldenummer: 02787723.2

(22) Anmeldetag: **18.11.2002**

(51) Int Cl.:
*B60T 8/48* (2006.01)      *B60T 17/22* (2006.01)
*F16D 66/00* (2006.01)     *B60T 13/74* (2006.01)
*B60T 7/04* (2006.01)

(86) Internationale Anmeldenummer:
**PCT/EP2002/012917**

(87) Internationale Veröffentlichungsnummer:
**WO 2003/043864 (30.05.2003 Gazette 2003/22)**

(54) **BETRIEB EINES FAHRZEUGBREMSSYSTEMS IN ABHÄNGIGKEIT VON BREMSFLÄCHENTEMPERATUREN**

OPERATION OF A VEHICLE BRAKE SYSTEM DEPENDING ON BRAKE SURFACE TEMPERATURES

FONCTIONNEMENT D'UN SYSTEME DE FREINAGE DE VEHICULE EN FONCTION DE LA TEMPERATURE DE FACES DE FREINAGE

(84) Benannte Vertragsstaaten:
**AT BE BG CH CY CZ DE DK EE ES FI FR GB GR IE IT LI LU MC NL PT SE SK TR**

(30) Priorität: **23.11.2001 DE 10157449
24.06.2002 DE 10228115**

(43) Veröffentlichungstag der Anmeldung:
**18.08.2004 Patentblatt 2004/34**

(73) Patentinhaber: **Lucas Automotive GmbH
56070 Koblenz (DE)**

(72) Erfinder:
• **KINDER, Ralf
56337 Eitelborn (DE)**
• **LEITER, Ralf
56179 Vallendar (DE)**
• **POERTZGEN, Gregor
56068 Koblenz (DE)**

(74) Vertreter: **Schmidt, Steffen J.
Wuesthoff & Wuesthoff,
Patent- und Rechtsanwälte,
Schweigerstrasse 2
81541 München (DE)**

(56) Entgegenhaltungen:
EP-A- 1 083 360      WO-A-02/22417
DE-A- 3 407 716      DE-A- 4 316 993
DE-A- 4 418 768      DE-A- 10 029 238
DE-A- 19 632 863     DE-A- 19 861 144
FR-A- 2 794 825

**Beschreibung**

**Gebiet der Erfindung**

Die vorliegende Erfindung betrifft im Allgemeinen die Bestimmung der Temperatur einer Bremsfläche eines Fahrzeugbremssystems, die eine Bremsscheibe und/oder einen Bremsbelag umfassen kann. Insbesondere betrifft die vorliegende Erfindung die Bestimmung der Temperaturen von Bremsflächen eines Fahrzeugbremssystems in Abhängigkeit einer Verzögerung oder Beschleunigung des Fahrzeuges während eines Bremsvorganges und den Betrieb des Fahrzeugbremssystems in Abhängigkeit der Bremsflächentemperaturen.

**Stand der Technik**

Aus DE 100 12 448 A1 ist ein Verfahren zur Bremskraftverteilung bei Fahrzeugen bekannt, bei dem überprüft wird, ob Radbremsen überhitzt sind oder für diese eine Überhitzungsgefahr besteht. Ist dies der Fall, werden die Radbremsen alternierend mit Bremskraft beaufschlagt. Dadurch wird erreicht, dass in den Zeiträumen, während denen eine der Radbremsen nicht mit Bremskraft beaufschlagt ist, diese sich abkühlen kann. Um auch bei überhitzten Radbremsen oder einer Überhitzungsgefahr für diese Notbremsungen zuzulassen, werden die Radbremsen nicht wie beschrieben sondern auf herkömmliche Weise mit Bremskraft beaufschlagt, wenn Fahrzeugverzögerungen vorgegeben werden, die einen Grenzwert überschreiten. Eine Überhitzung von Radbremsen oder eine Überhitzungsgefahr für diese liegt hier vor, wenn die Temperatur der Radbremsen einen vorbestimmten Grenzbereich oder -wert überschritten hat bzw. in einem vorbestimmten Temperaturbereich liegt, bei dessen Überschreitung mit einer Überhitzung zu rechnen ist. Hierfür ist es vorgesehen die Temperaturen der Radbremsen unmittelbar mit Temperatursensoren zu erfassen oder mit Hilfe eines Temperaturmodels zu ermitteln. Bei Verwendung eines Temperaturmodels ist es vorgesehen, Größen zu Grunde zu legen, die Hydraulikdrücke bei hydraulischen Bremsen, Stromaufnahme bei elektromechanischen Bremsen, Bremsdauer und dergleichen angeben.

Gemäß der DE 44 18 768 A1 wird die Temperatur einer Bremsfläche eines Kraftfahrzeugrades indirekt aus der Raddrehzahl und Bremsenzustandsdaten berechnet. Die Bremsflächentemperatur wird im Fahrbetrieb zyklisch neu bestimmt, wobei in jedem Zyklus die aktuelle Bremsflächentemperatur um einen ersten Wert bis minimal auf eine vorgegebene Minimaltemperatur verringert wird. Ferner ist es vorgesehen, bei einer Aktivierung der Radbremse die aktuelle Bremsflächentemperatur in jedem Zyklus jeweils um einen zweiten Wert zu erhöhen, der in Abhängigkeit von Daten aus erfassten Raddrehzahlen bzw. aus daraus ableitbaren Größen ermittelt wird. Die aus den Daten für erfasste Raddrehzahlen ableitbaren Größen umfassen die Fahrzeuggeschwindigkeit und eine Fahrzeugverzögerung aufgrund der Bremswirkung. Zur Ermittlung des zweiten Werts, die zur Erhöhung der aktuellen Bremsflächentemperatur verwendet wird, wird die in thermische Energie umgesetzte und als solche der Radbremse zugeführte Verzögerungsenergie berechnet, die proportional zum Produkt aus der Fahrzeuggeschwindigkeit und -verzögerung ist. Um Beschädigungen der Bremsflächen zu vermeiden, werden Regeleingriffe der Steuerung der Bremsanlage (z.B. ABS, elektronisches Traktionssystem) in Abhängigkeit der Bremsflächentemperaturen selbstständig unterbrochen, abgeschaltet oder bis auf weiteres unterbunden, um eine übermäßige Erwärmung der Bremsflächen zu vermeiden. Das kann z.B. dazu führen, dass in einer Situation, die der Fahrzeugführer nicht mehr allein beherrschen kann und Unterstützung durch einen geregelten Betrieb der Bremsanlage erforderlich wäre, diese wegen zu hoher Bremsflächentemperaturen nicht bereitgestellt wird. Dabei kann es zu einer Beschädigung des Fahrzeuges kommen, die schwerwiegender als eine mögliche Beschädigung von Bremsflächen aufgrund einer Überhitzung ist.

Zur Bestimmung einer Temperatur einer Bremsscheibe eines Kraftfahrzeuges ist es aus der DE 38 13 514 A1 bekannt, einen auf Temperaturänderungen ansprechenden Geber zu verwenden, der in der Nähe der Bremsscheibe angeordnet ist, um deren Wärmestrahlung zu erfassen. Dies erfordert es, dass an jeder zu überwachenden Bremsscheibe eine entsprechender, temperaturempfindlicher Geber anzuordnen ist. Da die Geber von den Bremsscheiben beabstandet angeordnet sind, kann es zu einer fehlerhaften Temperaturbestimmung kommen, beispielsweise aufgrund von Spritzwasser von der Fahrbahn oder von einer Verunreinigung des Sensors oder von durch den Geber erfasster Wärmestrahlung, die von anderen Komponenten des Fahrzeugs abgestrahlt wird.

Die DE 199 43 352 A1 offenbart eine Vorrichtung und ein Verfahren zum Bestimmen der Temperatur an einem Fahrzeug vorgesehener Bremselemente, bei denen die momentane kinetische Energie des Fahrzeuges berechnet und mit einem vorherigen Wert für die kinetische Fahrzeugenergie verglichen wird. Bei einer Abnahme der kinetischen Energie des Fahrzeuges wird aus dieser Abnahme die den Bremselementen zugeführte Wärmeenergie und daraus die Temperaturen der Bremselemente berechnet. Zur Bestimmung der kinetischen Energie des Fahrzeuges wird die Masse des Fahrzeuges einschließlich der Zuladungen und die momentane Fahrzeuggeschwindigkeit verwendet. Um äußere Einflüsse, wie z. B. die Neigung der Fahrbahn, die Beschaffenheit der Fahrbahnoberfläche bzw. die daraus resultierende Reibung der Fahrzeugräder auf der Fahrbahnoberfläche, den Beladungszustand des Fahrzeuges, den durch beispielsweise eine Dachlast veränderten Luftwiederstandsbeiwert des Fahrzeuges und dergleichen, bei der Berechnung der Temperaturen der Bremselemente zu berücksichtigen, werden jeweils entsprechende Größen, beispielsweise mittels zusätzlicher Sensoren, ermittelt und bei der Berechnung der Temperaturen der Bremselemente verwendet.

Aus der DE 43 16 993 A1 ist es bekannt, die Temperatur von Bremsscheiben einer Fahrzeugbremsanlage indirekt, d.h. ohne zur Hilfenahme entsprechender Sensoren zu ermitteln. Hierfür werden während eines Bremsvorganges Größen erfasst, die die Energiebilanz des Kraftfahrzeuges charakterisieren, wie z. B. das Fahrzeuggewicht, die Fahrzeuggeschwindigkeit und -beschleunigung, Radumfangsgeschwindigkeiten und -beschleunigungen und die Fahrbahnneigung. Aus diesen Größen werden die von jedem Bremsbelag jeweils zu verrichtende Reibungsarbeit und Reibungsleistung berechnet. Die Temperatur der Bremsscheiben wird dann jeweils aus der entsprechenden berechneten Reibungsarbeit und Reibungsleistung, der aktiven Bremsscheibenmasse sowie der spezifischen Wärmekapazität des Bremsscheibenmaterials ermittelt. Die ermittelte Bremsscheibentemperatur wird verwendet, um Informationen über den Belastungszustand der Bremsanlage und darüber zu erhalten, ob eine bestimmte Bremsfolge, d.h. eine zeitliche Folge von Bremskräften an den Bremsscheiben geeignet ist, die Bremsscheibentemperatur in einem gewünschten Bereich zu halten. Angaben, wie solche Informationen weiter verwendet werden, sind in diesem Dokument nicht zu finden.

Aus der DE 40 20 693 A1 ist es bekannt, Temperaturänderungen von Bremsen für kleine vorgegebene Zeitabstände aus der Summe des Quadrats der Fahrzeuggeschwindigkeit und des Quadrats der Fahrzeugverzögerung jeweils mit einer fahrzeugspezifischen Konstanten multipliziert zu berechnen. Führt eine Temperaturerhöhung zu einem Überschreiten eines Grenzwertes für die Bremsentemperaturen wird eine Warnlampe eingeschaltet. Ferner kann das Motordrehmoment reduziert werden, um eine Geschwindigkeit zu erreichen, bei der ein Anhalten ohne Bremsen oder ein Abbremsen ohne Bremsüberhitzung möglich ist. Diese automatische Geschwindigkeitsverringerung kann z.B. bei Autobahnfahrten zu gefährlichen Fahrsituationen führen.

Alternativ ist es vorgesehen, bei zu hohen Bremsentemperaturen die Antischlupfregelung des Fahrzeuges abzuschalten. Dies hat den Nachteil, dass zwar eine Beschädigung der Bremsen aufgrund zu hoher Temperaturen vermieden werden kann, aber in Kauf genommen wird, dass schwerwiegendere Beschädigungen des Fahrzeugs aufgrund ausgeschalteter Antischlupfregelung auftreten können.

DE 196 32 863 A1 offenbart, bei einem durch ein Bremssystem im Stillstand gehaltenes Fahrzeug Temperaturen an Bremsscheiben zu ermitteln und in Abhängigkeit von Temperaturänderungen Bremskräfte des Bremssystems so zu steuern, dass das Fahrzeug im Stillstand auch bei abkühlender Bremsscheibe sicher gehalten wird.

WO 02/22417 A1 offenbart, bei von einem Fahrzeugführer erzeugten Bremskräfte Temperaturen an Bremsscheiben zu erfassen und in Abhängigkeit von dabei auftretenden Temperaturänderungen die von den Bremsscheiben erzeugten Kräfte so zu steuern, dass eine Überhitzung vermieden wird.

DE 44 18 768 A1 offenbart, bei einer temperaturabhängigen Steuerung von durch Bremsflächen erzeugten Bremskräfte für ein Fahrzeug aktuell vorliegende Fahrzustände und Abkühlvorgänge der Bremsflächen mit zu berücksichtigen.

DE 43 16 993 A1 offenbart, Änderungen der kinetischen Energie eines Fahrzeugs zur Berechnung von Bremsscheibentemperaturen heranzuziehen.

DE 198 61 144 A1 offenbart, bei einer temperaturabhängigen Steuerung einer Bremsanlage eines Kraftfahrzeugs den Verschleiß von Bremsbelägen, aktuelle Fahrzustände und Erwärmungs- und Abkühlvorgänge der Bremsscheiben zu berücksichtigen.

FR 2 794 825 offenbart, Änderungen der kinetischen Energie eines Fahrzeugs bei einer temperaturabhängigen Steuerung eines Fahrzeugbremssystems heranzuziehen.

DE 34 07 716 A1 offenbart, zur Ermittlung einer Bremsentemperatur die Dauer heranzuziehen, für die die Bremse aktiviert ist.

## Aufgabe der Erfindung.

Aufgabe der vorliegenden Erfindung ist es, den Betrieb eines Fahrzeugbremssystems zu so verbessern, dass gewünschte Fahr- und Betriebszustande in Abhängigkeit von Temperaturen von Bremsflächen beibehalten oder erreicht werden. Ferner sollen thermische Beschädigungen der Bremsflächen vermieden werden, wobei in unerwünschten, insbesondere kritischen Fahrsituationen erforderliche Bremskräfte weiterhin bereitgestellt werden sollen.

## Zusammenfassung der Erfindung

Zur Lösung dieser Aufgabe stellt die vorliegende Erfindung ein Verfahren für ein Fahrzeugbremssystem bereit, bei dem die Temperatur einer oder mehrerer Bremsflächen in Abhängigkeit einer Verzögerung aufgrund eines Bremsvorgangs bestimmt wird. Hierbei werden Bremsvorgänge berücksichtigt, die beispielsweise mittels einer Betätigung des Fahrzeugbremssystems durch einen Fahrzeugführer, durch eine Steuereinheit (z.B. ECU = electronic control unit) des Fahrzeuges zur Steuerung des Fahrbetriebs (z.B. elektronische Stabilitätskontrolle, elektronische Traktionskontrolle, Antischlupfregelung, etc.) und von einer Steuerung für das Fahrzeugbremssystem (z.B. Bremsassistent, gesteuerte Feststellbremse, Parkbremse, Anfahrhilfe, Parkhilfe, Bremsassistent etc.) ausgelöst werden.

Ferner ist es vorgesehen, Bremsflächentemperaturen in Abhängigkeit einer Beschleunigung zu bestimmen, wenn das Fahrzeugbremssystem Bremskräfte erzeugt. Dies kann beispielsweise der Fall sein, wenn beim Beschleunigen des Fahrzeugs der Fahrzeugführer eine Betätigung des Fahrzeugbremssystems beibehält, das Fahrzeugbremssystem Bremskräfte aufrecht erhält oder noch nicht gebaut hat, wenn das Fahrzeugbremssystem beispielsweise als Feststellbremse, Parkbremse oder Anfahrhilfe betrieben wird, die Fahrzeugsteuerung, beispielsweise in Abhängigkeit des Beschleunigungsvorgangs, das Fahrzeugbremssystem aktiviert, um beispielsweise den Schlupf oder die Traktion zu steuern, und dergleichen. Ferner werden auf diese Weise Bremsflächentemperaturen beim Auftreten einer Beschleunigung des Fahrzeugs bestimmt, wenn beispielsweise aufgrund einer Fehlfunktion des Fahrzeugbremssystems selbst oder anderer Komponenten des Fahrzeugs das Fahrzeugbremssystem in unerwünschter Weise aktiviert ist.

In Abhängigkeit der ermittelten Bremsflächentemperaturen werden dann an den Bremsflächen wirkende Bremskräfte und insbesondere deren Höhe gesteuert.

Die an den Bremsflächen wirkenden Bremskräfte werden so gesteuert, dass ein gewünschter Fahrzustand, der eine Aktivierung des Fahrzeugbremssystems erfordert und/oder bei dem das Fahrzeugbremssystem aktiviert ist, beibehalten oder erreicht wird, ohne dass dabei zu hohe Bremsflächentemperaturen auftreten.

Erfindungsgemäß wird die temperaturabhängige Bremskraftsteuerung außer Kraft gesetzt, d.h. es sollten keine Bremskräfte an den Bremsflächen erzeugt werden, wenn der gewünschte Fahrzustand durch eine Reduktion der Motorleistung und/oder Lenkbewegungen eines Fahrzeugführers ohne Aktivierung des Farzeugbremssystems erreicht oder beibehalten werken kann.

Die Bremskraftsteuerung kann auch so erfolgen, dass unerwünschte Fahr- oder Betriebszustände des Fahrzeuges (z.B. Schleudern, Kippen, Wegrollen), vorzugsweise ohne zu hohe Bremsflächentemperaturen, vermieden werden.

Kann ein gewünschter Fahrzustand nur erreicht werden bzw. kann ein unerwünschter Fahr- oder Betriebszustand nur vermieden werden, wenn das Fahrzeugbremssystem aktiviert wird oder bleibt, obwohl zu hohe Bremsflächentemperaturen vorliegen und/oder zu hohe Bremsflächentemperaturen auftreten können, ist es vorgesehen, entsprechende Bremskräfte gesteuert durch Fahrzeugbremssystem und/oder aufgrund einer Betätigung des Fahrzeugbremssystems durch einen Fahrzeugführer zu erzeugen bzw. zuzulassen. Auf diese Weise können Beschädigungen des Fahrzeugs vermieden werden, die, verglichen mit Beschädigungen von Bremsflächen aufgrund zu hoher Temperaturen, schwerwiegender sind.

Wird beispielsweise festgestellt, dass die Temperatur einer oder mehrerer Bremsflächen über einem vorbestimmten, zulässigen Wert liegt, kann das Fahrzeugbremssystem so gesteuert werden, dass nach einer Feststellung zu hoher Bremsflächentemperaturen betroffene Bremsfilächen mit reduzierten Kräften beaufschlagt werden. Um eine gewünschte Bremswirkung zu erzielen, können dabei Bremsflächen mit tolerierbaren Temperaturen höheren Kräften ausgesetzt werden. Ferner können in Abhängigkeit der Bremsflächentemperaturen einzelne oder mehrere Funktionen einer Steuerung des Fahrzeugs (z.B. ABS, elektronisches Stabilitätsprogramm, Traktionskontrolle, Schlupfregelung) teilweise oder vollständig deaktiviert und/oder nur für bestimmte Fahrzustände, insbesondere extreme Fahrzustände, freigegeben werden.

Bei einem Fahrzeug mit ABS wird dieses normalerweise bei jedem Bremsvorgang aktiviert, obwohl dies nicht für jeden Bremsvorgang erforderlich ist, was zu unerwünschten oder unzulässigen Temperaturerhöhungen der Bremsflächen führen kann. Dies kann mit der vorliegenden Erfindung vermieden werden. Wenn kritische Bremsflächentemperaturen ermittelt werden, d.h. solche, die zu hoch sind oder bei denen Gefahr besteht, dass, z.B. aufgrund des Verlaufs des Fahrbetriebs des Fahrzeuges, zu hohe Bremsflächentemperaturen erreicht werden, kann die Unterstützung durch das ABS reduziert oder vollständig unterbunden werden. Hierbei ist es vorgesehen, neben der Bremsflächentemperatur auch den jeweiligen Fahr- und/oder Betriebszustand des Fahrzeuges zu berücksichtigen.

Bei Fahr- oder Betriebszuständen, die nur mit Unterstützung des Fahrzeugbremssystems erreichbar bzw. beizubehalten sind, ist es vorteilhaft auch bei kritischen Bremsflächentemperaturen das Fahrzeugbremssystem zu aktivieren. Im Fall von Fahr- und Betriebszuständen, bei denen eine Unterstützung durch das Fahrzeugbremssystem nicht unbedingt erforderlich ist, aber hilfreich wäre, und/oder bei Bremsflächentemperaturen, die nicht oder noch nicht als kritisch einzustufen sind, ist es vorgesehen, die Bremskräfte an den Bremsflächen abgestuft zu erzeugen. D.h., die Höhe der Bremskräfte so zu steuern, dass keine unerwünschten Fahr- oder Betriebssituationen auftreten und sich dabei die Bremsflächentemperaturen in einem zulässigen Bereich befinden.

Umfasst das Fahrzeugbremssystem eine Feststellbremse oder eine Parkbremse, ist die Kenntnis der Bremsflächentemperaturen von hoher Bedeutung, da sich beim Stillstand des Fahrzeugs die Bremsflächen abkühlen und aufgrund der daraus resultierenden "Verkleinerung" der Bremsflächen (auch als sog. "Belagschrumpfen" bezeichnet) die Zuspannkraft reduziert. Um zu gewährleisten, dass nach einem Abkühlen der Bremsflächen das Fahrzeugbremssystem ausreichende Bremskräfte zur Verfügung stellt, die ein Wegrollen des Fahrzeugs verhindern, kann in Abhängigkeit der beim Erreichen des Stillstandzustands des Fahrzeugs ermittelten Bremsflächentemperaturen in Verbindung mit Informationen, die das Abkühlen der Bremsflächen charakterisieren und oder einer der oben genannten Temperaturbestimmung für ein nicht beschleunigtes oder nicht verzögertes Fahrzeug die aktuelle Bremsflächentemperatur bzw. deren Verlauf bestimmt werden. In Abhängigkeit der jeweiligen so bestimmten aktuellen Bremsflächentemperaturen kann dann das Fahrzeugbremssystem so gesteuert werden, dass die an den Bremsflächen wirkenden Kräfte erhöht werden, um deren Abkühleffekt zu kompensieren.

Bei einer bevorzugten Ausführungsform der vorliegenden Erfindung wird zur Bremsflächentemperaturbestimmung eine Verzögerung oder Beschleunigung des Fahrzeugs selbst zugrunde gelegt.

Bei einer weiteren bevorzugten Ausführungsform, die alternativ oder optional zu der vorherig genannten vorgesehen ist, werden zur Temperaturbestimmung die an den einzelnen Rädern auftretenden Verzögerungen oder Beschleunigungen verwendet, um die Temperatur der entsprechenden Bremsfläche zu ermitteln.

Vorzugsweise werden Bremsflächentemperaturen ferner in Abhängigkeit der Dauer bestimmt, für die das Fahrzeugbremssystem beim Auftreten einer Verzögerung oder Beschleunigung aktiviert ist. Auf diese Weise werden bei der Bestimmung der Temperatur der Bremsflächen dynamische Charakteristika für den aktivierten Betriebszustand des Fahrzeugbetriebssystems einbezogen. Dies führt zu einer genaueren Temperaturbestimmung, wenn z.B. das Fahrzeug für einen kurzen Zeitraum stark verzögert oder über einen längeren Zeitraum schwach beschleunigt wird.

Bei einer ferner bevorzugten Ausführungsform der vorliegenden Erfindung wird zur Bestimmung von Bremsflächentemperaturen die Fahrzeugverzögerung oder - beschleunigung verwendet, um die aktuelle kinetische Energie des Fahrzeugs zu ermitteln. Die aktuelle kinetische Energie des Fahrzeugs wird dann verwendet, um die Temperatur der Bremsflächen zu bestimmen. Hierfür kann beispielsweise die aktuelle kinetische Energie des Fahrzeugs mit einer kinetischen Energie des Fahrzeugs vor bzw. bei einer Aktivierung des Fahrzeugbremssystems und/oder einer zuvor bestimmten aktuellen kinetischen Energie des Fahrzeugs verglichen werden. Die so ermittelte Änderung der kinetischen Energie des Fahrzeugs gibt an, wie viel thermische Energie (maximal) der Bremsflächen zugeführt worden ist.

Zur Berechnung der kinetischen Energie des Fahrzeugs, die für einen Vergleich mit dessen aktueller kinetischer Energie verwendet werden kann, ist es vorgesehen, die Geschwindigkeit des Fahrzeugs beim Einleiten einer Aktivierung des Fahrzeugbremssystems zugrunde zu legen.

Vorzugsweise wird zur Berechnung der momentanen kinetischen Energie des Fahrzeugs die kinetische Energie in Abhängigkeit der Fahrzeugverzögerung oder - beschleunigung und der Dauer bestimmt, für die das Fahrzeugbremssystem aktiviert ist.

Bei einer Temperaturbestimmung auf der Grundlage von einzelnen Rädern des Fahrzeugs auftretenden Verzögerungen und Beschleunigungen können für die Räder, an denen Bremskräfte erzeugt werden, jeweils die aktuelle kinetische Energie ermittelt werden. Hierfür kann beispielsweise die jeweilige Winkelbeschleunigung der Räder verwendet werden.

Um die den Bremsflächen, an denen Bremskräfte wirken, zugeführte thermische Energie und daraus deren Temperatur zu ermitteln, wird basierend auf der jeweiligen aktuellen kinetischen Energie des entsprechenden Rades eine Änderung der kinetischen Radenergie ermittelt. Hierfür kann die aktuelle kinetische Radenergie mit einer zuvor bestimmten aktuellen kinetischen Energie des jeweiligen Rades verglichen werden. Alternativ ist es möglich für diesen Vergleich die kinetische Energie eines Rades zu verwenden, die sich aus der entsprechenden Winkelgeschwindigkeit ergibt, die das Rad aufweist, bevor oder wenn an diesem Bremskräfte erzeugt werden.

Ferner können bei einer Temperaturbestimmung von Bremsflächen auf der Grundlage von an den einzelnen Rädern auftretenden Verzögerungen und Beschleunigungen die jeweiligen wirksamen Bremskräfte ermittelt werden, um daraus in Verbindung mit den ermittelten Radverzögerungen bzw. -beschleunigungen die an der jeweiligen Bremsfläche verrichtete Arbeit und daraus die dieser zugeführte thermische Energie zu ermitteln.

Ferner können bei der Ermittlung der kinetischen Energien für die verschiedenen Ermittlungszeitpunkte weitere Größen berücksichtigt werden, wie z.B. die Masse des Fahrzeugs einschließlich eventuell vorhandener Dachlasten, fahrzeugspezifische und insbesondere für das Fahrzeugbremssystem spezifische Größen und dergleichen.

Wie oben ausgeführt, gibt die aktuelle kinetische Energie bzw. eine Änderung der kinetischen Energie des Fahrzeugs an, welche Energie den Bremsflächen (maximal) zugeführt werden kann. Darauf basierend kann die den Bremsflächen zugeführte thermische Energie abgeschätzt, bestimmt oder exakt berechnet werden. Hierbei ist es vorgesehen, nicht nur die thermische Energie zur Temperaturbestimmung zugrunde zu legen, die bei einer Aktivierung des Fahrzeugbremssystems und aufgrund der daraus resultierenden Bremskräfte den Bremsflächen zugeführt wird, sondern auch thermische Energie, die unabhängig von einer Aktivierung des Fahrzeugbremssystems zu einer Bremsflächentemperaturerhöhung führen kann. Hierzu zählen z.B. Wärmestrahlung des Fahrzeugmotors oder anderer Fahrzeugkomponenten, beispielsweise Elektromotoren für das Fahrzeugbremssystem, Abgaswärme und die Umgebungstemperatur, insbesondere die in der Nähe der Bremsflächen wirkende Umgebungstemperatur.

Des Weiteren kann bei der Bremsflächentemperaturbestimmung thermische Energie berücksichtigt werden, die vor, während und/oder nach einer Aktivierung des Fahrzeugbremssystems von den Bremsflächen abgegeben wird. Eine solche Abfuhr thermischer Energie kann beispielsweise aufgrund von Abkühlvorgängen der Bremsflächen und der diese umgebenden Umgebung, durch Kühlung aufgrund des Fahrtwindes, durch eine aktive Kühlung, beispielsweise in Form eines Gebläses, und dergleichen auftreten.

Vorzugsweise werden einzelne, mehrere oder alle Größen, die für eine Bremsflächentemperaturbestimmung verwendet werden unter Verwendung von schon vorhandenen Fahrzeugkomponenten ermittelt. Beispielsweise kann hierfür eine Fahrzeugsteuerung verwendet werden, die Funktionen eines Antiblockiersystems, eines elektronischen Stabilitätsprogramms, einer Traktionskontrolle und/oder einer Antischlupfregelung bereitstellt. Zur Ermittlung der tatsächlichen bewegten Masse des Fahrzeugs können Sensoren für das Fahrzeugfederungssystem und/oder einer Niveaukontrolle dienen. Falls das Fahrzeugbremssystem ebenfalls eine Steuerung umfasst, können auch von dieser bereitgestellten Daten verwendet werden.

Zur Bestimmung der tatsächlich vorliegenden aktuellen Bremsflächentemperatur ist es vorgesehen, eine Bremsflächentemperatur zugrunde zu legen, die die Bremsflächen beim Stillstand des Fahrzeugs, insbesondere nach einem längeren Stillstand des Fahrzeugs aufweisen. Vorteilhafterweise wird hier auch die Umgebungstemperatur berücksichtigt.

Um ferner Temperaturänderungen der Bremsflächen zu bestimmen, die sich bei einer Fahrzeugbewegung mit konstanter Geschwindigkeit ergibt, kann die Bremsflächentemperaturbestimmung in Abhängigkeit der Fahrzeuggeschwindigkeit erfolgen. Vorzugsweise werden hierbei eine oder mehrere Größen ermittelt, die den Grad einer Aktivierung des Fahrzeugbremssystems angeben. Basierend auf dieser oder diesen Größen für eine Aktivierung des Fahrzeugbremssystems, die zu keiner Fahrzeugverzögerung oder -beschleunigung führt, und der Fahrzeuggeschwindigkeit kann dann die Bremsflächentemperatur, beispielsweise durch eine Bestimmung der kinetischen Energie des Fahrzeugs, ermittelt werden.

Alternativ oder ergänzend ist es vorgesehen, für Betriebszustände des Fahrzeugs, in denen keine Verzögerungen oder Beschleunigungen auftreten, auf die Bremsflächen wirkende Kräfte für eine Temperaturbestimmung zu ermitteln.

Bei einer weiteren bevorzugten Ausführungsform wird basierend auf der Temperatur und/oder Temperaturänderung einer oder mehreren Bremsflächen ein Verschleiß derselben ermittelt. Hierfür können mathematische modellierte und/oder empirisch ermittelte Definitionen verwendet werden, die den Zusammenhang von Temperatur bzw. Temperaturänderung einer Bremsfläche und dem daraus resultierenden Verschleiß derselben beschreiben.

Der Verschleiß der Bremsfläche kann auch ermittelt werden, indem eine Änderung der kinetischen Energie des Fahrzeugs bestimmt und, vergleichbar zu der oben beschriebenen Ermittlung der Temperatur bzw. Temperaturänderung der Bremsfläche, daraus der Verschleiß berechnet wird.

Vorzugsweise sind Angaben, die den Zusammenhang von Temperatur bzw. Temperaturänderung einer oder mehreren Bremsflächen und/oder von einer Änderungen der kinetischen Energie des Fahrzeugs einerseits und dem daraus resultierenden Verschleiß der Bremsfläche andererseits charakterisieren, in einem oder mehreren Kennfeldern der Steuereinheit (ECU) des Fahrzeugs gespeichert.

Um den Betrieb des Fahrzeugbremssystems auch hinsichtlich des Verschleißes der Bremsfläche zu optimieren, werden die Bremskräfte an der Bremsfläche in Abhängigkeit des Verschleißes gesteuert. Dabei ist es vorgesehen, eine der beiden zuvor genannten Arten, den Bremsflächenverschleiß zu ermitteln, oder beide Berechnungsarten abwechselnd oder gleichzeitig zur gegenseitigen Überprüfung einzusetzen.

Es kann ein Verschleißfaktor verwendet werden, um in Verknüpfung mit der Temperatur bzw. Temperaturänderung der Bremsfläche und/oder der Änderung der kinetischen Energie des Fahrzeugs den Bremsflächenverschleiß zu bestimmen. Vorzugsweise werden für Fahrzustände, in denen das Fahrzeugbremssystem aktiviert ist, und für Fahrzustände, in denen das Fahrzeugbremssystem nicht aktiviert ist, unterschiedliche Verschleißfaktoren verwendet.

Ferner stellt die vorliegende Erfindung eine Vorrichtung für ein Fahrzeugbremssystem ein eine derartige Vorrichtung umfassendes Fahrzeugbremssystem und ein Installations- und Betriebsverfahren für ein Fahrzeugbremssystem gemäß den nebengeordneten Ansprüchen bereit.

**Kurzbeschreibung der Figur**

Bei der folgenden Beschreibung bevorzugter Ausführungsformen wird auf die beigefügte Zeichnung Bezug genommen, in der:

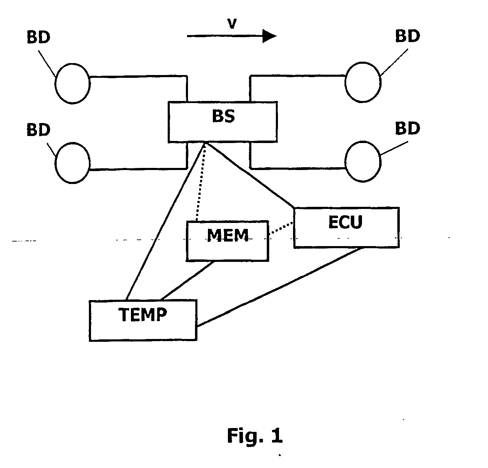

Fig. 1     eine schematische Darstellung eines Fahrzeuges mit einer erfindungsgemäßen Temperaturbestimmung ist.

**Beschreibung bevorzugter Ausführungsformen**

Im Folgenden werden bevorzugte Ausführungsformen am Beispiel eines Kraftfahrzeuges (Auto) mit einer elektronischen Steuereinheit ECU und einem elektronisch und durch einen Fahrzeugführer steuerbaren Fahrzeugbremssystem BS erläutert. Ferner werden Temperaturbestimmungen für eine Bremsfläche BD einer Radbremse (nicht bezeichnet) des Fahrzeugbremssystems BS beschrieben, wobei es vorgesehen ist, Bremsflächentemperaturbestimmungen auf diese Weise für mehrere oder alle Bremsflächen BD des Fahrzeugs durchzuführen.

Zur Durchführung von Temperaturbestimmungen einzelner oder mehrerer Bremsflächen BD ist eine Einrichtung TEMP vorhanden, die eingerichtet und programmiert ist, einzelne, mehrere oder alle im Folgenden beschriebenen zur Bremsflächentemperaturbestimmung durchzuführen. Des Weiteren ist eine Speichereinrichtung MEM vorgesehen, die der Temperaturbestimmungseinrichtung TEMP zugeordnet ist und, beispielsweise wie im Folgenden erläutert, Kennfelder speichert. Wie durch die gestrichelten Linien in Fig. 1 angedeutet, kann die Speichereinrichtung MEM auch dem Fahrzeugbremssystem BS und/oder der Fahrzeugsteuereinheit ECU zugeordnet sein. Auch wenn die Komponenten ECU, BS, TEMP und MEM in Fig. 1 separat dargestellt sind, ist es vorgesehen, dass einzelne, mehrere oder alle Komponenten baueinheitlich integriert sind (in Folgendem werden übersichtshalber die Bezugszeichen der bis hierher genannten Komponenten weggelassen).

Grundsätzlich wird beim Verzögern oder Beschleunigen des Fahrzeugs ein konstanter Anteil der Änderung dessen kinetischer Energie den Bremsen und insbesondere den Bremsflächen des Fahrzeugbremssystems zugeführt, wenn dieses beim Verzögern oder Beschleunigen aktiviert ist. Somit lässt sich die einer Bremsfläche zugeführte thermische Energie $W_{therm,b}$ in Abhängigkeit einer Änderung der kinetischen Energie des Fahrzeugs $\Delta W_{kin,v}$ wie folgt darstellen:

$$W_{therm,b} = \Delta W_{kin,v} * k,$$

wobei k ein fahrzeugspezifischer und insbesondere ein für das Fahrzeugbremssystem spezifischer Faktor ist, der zwischen Null und Eins liegt und den als thermische Energie zugeführten Energieanteil charakterisiert.

Zur Berechnung der Änderung der kinetischen Energie des Fahrzeugs wird als Ausgangswert die kinetische Energie zugrunde gelegt, die sich aus der Masse der Fahrzeugs und der Fahrzeuggeschwindigkeit ergibt, mit der sich das Fahrzeug zu Beginn der Verzögerung oder der Beschleunigung bewegt. Im Fall einer Verzögerung des Fahrzeuges, d.h. beim Beginn eines Bremsvorgangs, wird die Geschwindigkeit des Fahrzeugs zu einem Zeitpunkt ermittelt, der im Wesentlichen mit der Aktivierung des Fahrzeugbremssystems zusammenfällt. Im Gegensatz dazu ist es im Fall einer Fahrzeugbeschleunigung möglich, dass der Zeitpunkt, an dem die Fahrzeuggeschwindigkeit ermittelt wird, vor oder nach einer Aktivierung des Fahrzeugbremssystems liegt, wenn das Fahrzeugbremssystem beim Beschleunigen schon bzw. noch aktiviert ist bzw. erst während des Beschleunigungsvorgangs aktiviert wird.

Die als Ausgangswert zugrunde gelegte kinetische Energie $W_{kin,start}$ des Fahrzeugs mit einer Masse m und der, wie oben beschrieben ermittelten, zu Beginn des Bremsvorganges vorliegenden Geschwindigkeit $v_{start}$ kann wie folgt berechnet werden:

$$W_{kin,start} = 0{,}5 * m * v^2_{start}.$$

Zur Berechnung der kinetischen Energie des Fahrzeugs am Ende des Messzeitraums, der im Allgemeinen mit der Beendigung der Aktivierung des Fahrzeugbremssystems endet oder, wenn für eine Aktivierung des Fahrzeugbremssystems mehrer Messzeiträume verwendet werden, in dem Zeitraum liegt, in dem das Fahrzeugbremssystem aktiviert ist, wird die Fahrzeugverzögerung oder -beschleunigung für den Messzeitraum und die Dauer desselben ermittelt. Die am Ende des Messzeitraums vorliegende kinetische Energie $W_{kin,b}$ des Fahrzeugs kann dann wie folgt berechnet werden:

$$W_{kin,b} = 0{,}5 * a^2_b * t^2_b * m,$$

wobei $a_b$ die Verzögerung oder Beschleunigung des Kraftfahrzeugs und $t_b$ die Dauer des Messzeitraums charakterisieren.

Aus diesen Werten für die kinetische Energie des Fahrzeugs kann die Änderung der kinetischen Energie und daraus die der Bremsfläche zugeführte thermische Energie $W_{therm,b}$ berechnet werden:

$$W_{therm,b} = 0{,}5 * k * m * (v^2_{start} + a^2_b * t^2_b),$$

wobei ein negativer Wert für $a_b$ eine Fahrzeugverzögerung und ein positiver Wert für $a_b$ eine Fahrzeugbeschleunigung angeben.

Zur Ermittlung der Fahrzeugverzögerung oder -beschleunigung $a_b$ kann auf Einrichtungen (z.B. Verzögerungssensoren) des Fahrzeugbremssystems und/oder auf Daten der Fahrzeugsteuerung, die beispielsweise die Drehzahlen der Räder angeben, zurückgegriffen werden.

Da die Bremsfläche beim Betrieb des Fahrzeugs nicht nur thermische Energie aufgrund einer Aktivierung des Fahrzeugbremssystems erhält, sondern auch durch andere thermische Quellen erwärmt und aufgrund des Fahrzeugbetriebs und/oder aktiver Kühlvorrichtungen gekühlt wird, werden entsprechende Korrekturgrößen verwendet, die für eine genauere Bestimmung der Bremsflächentemperatur sorgen. Die aufgrund des Fahrzeugbetriebs erzeugte Abkühlenergie $W_{therm,c}$, die in erster Linie eine Kühlung aufgrund des durch die Fahrzeuggeschwindigkeit entstehenden Fahrtwindes darstellt, ist eine Funktion der Fahrzeuggeschwindigkeit. Da Fahrzeuge üblicherweise nicht mit Sensoren ausgestattet sind, die die kühlende Wirkung des Fahrtwindes erfassen, werden, wenn nicht entsprechende zusätzliche Sensoren vorgesehen sind, von der Fahrzeuggeschwindigkeit abhängige Kennfelder verwendet werden, die unterschiedlichen Fahrzeuggeschwindigkeiten entsprechende für die Bremsfläche wirksame Abkühlenergien $W_{therm,c}$ zuordnen. Diese Kennfelder sind der Fahrzeugsteuerung und/oder dem Fahrzeugbremssystem zugeordnet oder in einer Speichereinrichtung derselben gespeichert (siehe Fig. 1: MEM). Zur Berechnung der aktuellen Abkühlenergie $W_{therm,c}$ wird für die aktuelle Fahrzeuggeschwindigkeit ein entsprechender Wert aus den Kennfeldern ausgelesen. Hierbei können auch Interpolationverfahren verwendet werden, wenn für die aktuelle Fahrzeuggeschwindigkeit kein entsprechender Wert zur Verfügung steht.

Befindet sich das Fahrzeug im Stillstand (Fahrzeuggeschwindigkeit = 0) kann die Abkühlenergie $W_{therm,c}$ in Abhängigkeit einer Funktion ermittelt werden, die den Abkühlverlauf für das Fahrzeugbremssystem und insbesondere für die Bremsfläche im Stillstand, d.h. im Wesentlichen ohne weitere Faktoren, die für eine Abkühlung sorgen, charakterisiert. Hierbei kann berücksichtigt werden, ob das Fahrzeugbremssystem beim Stillstand des Fahrzeugs vollständig, teilweise oder überhaupt nicht aktiviert ist, d.h. ob an der Bremsfläche Kräfte wirken oder nicht. Dies ist beispielsweise zu berücksichtigen, wenn das Fahrzeugbremssystem als Feststellbremse oder Parkbremse arbeitet, bei denen das Fahrzeug im Stillstand gehalten wird, indem auf die Bremsflächen wirkende Kräfte erzeugt werden. Im einfachsten Fall wird eine lineare Funktion verwendet, die die Abgabe thermischer Energie von der Bremsfläche in Abhängigkeit der Zeit angibt.

In Abhängigkeit des Aufbaus des Fahrzeugs und des Fahrzeugbremssystems insbesondere der Radbremsen bzw. der Anordnung der Bremsflächen können sich die Bremsflächen aufgrund thermischer Energie erwärmen, die von anderen Wärmequellen stammt. Dies ist beispielsweise der Fall, wenn die Bremsfläche in der Nähe des Fahrzeugmotors oder anderer Wärmeabstrahlender Komponenten, wie z.B. der Abgasanlage des Fahrzeugs, angeordnet ist und/oder das Fahrzeugbremssystem Aktuatoren, Elektromotoren und dergleichen umfasst, die sich in der Nähe der Bremsfläche befinden.

Somit kann die thermische Energie $W_{therm,b}$ der Bremsfläche wie folgt berechnet werden:

$$W_{therm,b} = 0{,}5 * k * m \, (v^2_{start} + a^2_b * t^2_b) - W_{therm,c} + W_{therm,h}.$$

Aus der thermischen Energie $W_{therm,b}$, die der Bremsfläche wirksam zugeführt ist, wird dann unter Berücksichtigung thermischer Charakteristika der Bremsfläche deren Temperatur ermittelt.

Bewegt sich in das Fahrzeug mit einer konstanten Geschwindigkeit und ist dabei das Fahrzeugbremssystem nicht aktiviert, werden bei der Berechnung der Bremsflächentemperatur (en) die thermischen Energien $W_{therm,c}$ und $W_{therm,h}$ berücksichtigt.

Ferner gibt es Betriebszustände, in denen das Fahrzeug keine Geschwindigkeitsänderung erfährt, d.h. sich im Stillstand befindet oder mit gleichmäßiger Geschwindigkeit bewegt wird, und dabei das Fahrzeugbremssystem wenigstens kurzfristig für eine, mehrere oder alle Räder aktiviert ist. Dies ist beispielsweise der Fall, wenn sich das Fahrzeug auf einer geneigten Fahrbahn befindet oder bewegt und der Stillstandszustand oder eine gewünschte konstante Geschwindigkeit beibehalten wird, indem das Fahrzeugbremssystem durch Betätigung seitens eines Fahrzeugführers und/oder gesteuert Bremskräfte erzeugt. Weitere Beispiele hierfür sind Fahrzustände des Fahrzeugs, in denen das Fahrzeugbremssystem durch eine eigene Steuerung und/oder durch die Fahrzeugsteuerung gesteuert so aktiviert wird, dass Funktionen eines Antiblockiersystems, einer Traktionskontrolle, eines elektronischen Stabilitätsprogrammes, einer Antischlupfregelung und dergleichen bereitgestellt werden.

Da jede Aktivierung des Fahrzeugbremssystems zu einer Änderung der Temperaturen der Bremsflächen führt, können für eine genauere Bestimmung der Bremsflächentemperaturen auch solche Fahrzustände berücksichtigt werden. Der zugrunde liegende Ansatz, zur Bremsflächentemperaturbestimmung für das Fahrzeug wirksame Verzögerungen und Beschleunigungen zu verwenden, findet auch hier Anwendung. Die eingangs verwendeten Verzögerungs- und beschleunigungsvorgänge führen zu einer Änderung der Fahrzeuggeschwindigkeit, d.h. sie stellen Fahrzeugverzögerungen und -beschleunigungen dar. Hier werden nun Verzögerungen und Beschleunigungen zugrunde gelegt, die nicht die Fahrzeuggeschwindigkeit betreffen, sondern Verzögerungen und Beschleunigungen die an den einzelnen Rädern wirken.

Hierfür werden beispielsweise unter Verwendung der Fahrzeugsteuerung an den Rädern, an denen das Fahrzeugbremssystem Bremskräfte erzeugt, Verzögerungen oder Beschleunigungen sowie die Zeit ermittelt, während der Bremskräfte wirken. Daraus kann die Änderung der kinetischen Energie eines Rades, an dem Bremskräfte wirken, und basierend darauf die dem Rad zugeführte thermische Energie ermittelt werden. Um die Änderung der kinetischen Energie eines Rades zu bestimmen, kann, vergleichbar zu den bisherigen Ausführungen, als Ausgangswert die kinetische Energie des Rades, die sich aus der Winkelgeschwindigkeit des Rades ergibt, und/oder eine zuvor ermittelte kinetische Energie zugrunde gelegt werden, die sich aus der jeweiligen Verzögerung bzw. Beschleunigung ergibt.

Ferner ist es hier möglich, die einer Bremsfläche zugeführte thermische Energie zu ermitteln, indem die an den Rädern wirkenden Bremskräfte erfasst oder ermittelt werden, um in Verbindung mit den an den Rädern wirkenden Verzögerungen bzw.

Beschleunigungen und den entsprechenden Zeiträumen, in denen Bremskräfte vorliegen, die an den Rädern verrichtete Arbeit und daraus die den jeweiligen Bremsflächen zugeführte thermische Energie zu bestimmen.

Die beiden zuletzt genannten Wege, Bremsflächentemperaturen zu bestimmen, können alternativ oder gemeinsam verwendet werden, was in letzterem Fall zu einem redundanten Verfahren führt, welches die Temperaturbestimmung verbessern kann.

Die eingangs beschriebene Temperaturbestimmung auf der Grundlage einer Fahrzeugverzögerung oder -beschleunigung ist einfacher durchzuführen, da hierfür nur eine Verzögerung bzw. Beschleunigung erfasst wird. Dementsprechend ist diese Vorgehensweise insbesondere für Fahrzeuge geeignet, bei denen die Fahrzeugsteuerung (ECU) und die Steuerung des Fahrzeugbremssystemes keine Informationen über Verzögerungen und Beschleunigungen an einzelnen Rädern liefern. Ferner stellt dies eine Lösung für Fahrzeuge dar, die keine Einrichtungen umfassen, die Informationen über an dem Fahrzeug wirkende Verzögerungen und Beschleunigungen bereitstellen. Bei solchen Fahrzeugen wäre es lediglich erforderlich, Einrichtungen, wie z.B. Rechnereinheiten, Speichereinheiten, Sensoren und dergleichen, zu ergänzen, die wenigstens eine Fahrzeugverzögerung bzw. -beschleunigung erfassen und daraus Bremsflächentemperaturen berechnen können.

Die Bestimmung von Bremsflächentemperaturen auf der Grundlage von an einzelnen Rädern wirksamen Verzögerungen und Beschleunigungen kann bei entsprechend ausgestatteten Fahrzeugen alternativ oder ergänzend zu der auf einer Fahrzeugverzögerung bzw. -beschleunigung basierenden Temperaturbestimmung für Bremsflächen eingesetzt werden.

Die Bremsflächentemperaturbestimmung auf der Grundlage einer Fahrzeugverzögerung oder -beschleunigung ist schneller durchzuführen, da nicht die einzelnen Räder überwacht werden müssen. Dies kann zu einer ungenauen Bremsflächentemperaturbestimmung führen, da hierbei davon ausgegangen wird, dass bei einer Verzögerung oder Beschleunigung des Fahrzeugs die an die Bremsflächen übertragenen thermischen Energien im wesentlichen gleich sind. Bei Fahrzeugen, bei denen dies nicht gewährleistet werden kann, oder zur Überprüfung einer solchen'Temperaturbestimmung, ist die Temperaturbestimmung für Bremsflächen basierend auf an den einzelnen Rädern wirksamen Verzögerungen bzw. Beschleunigungen als alternatives bzw. redundantes Verfahren geeignet.

Ein Beispiel für die Verwendung der Bestimmung der Temperatur einer Bremsfläche ist ein Fahrzeugbremssystem, das als Feststellbremse oder Parkbremse arbeitet. Um ein Fahrzeug im Stillstand gegen Wegrollen zu sichern, ist es erforderlich, dass die Feststellbremse eine entsprechende minimale Bremswirkung erzeugt. Hierfür werden normalerweise die durch die Feststellbremse auf die Bremsflächen wirkenden Kräfte, im Folgenden kurz Zuspannkräfte, auf einen gewünschten, vorbestimmten Wert eingestellt. Wenn sich beispielsweise nach einem längeren Fahrbetrieb des Fahrzeugs die Bremsflächen erwärmt und dadurch ausgedehnt haben, nehmen die für den ausgedehnten Zustand der Bremsflächen eingestellten Zuspannkräfte ab, wenn sich die Bremsflächen im Stillstand abkühlen. Für einen in der Praxis auftretenden Fall liegt beispielsweise die Temperatur der Bremsflächen in der Größenordnung von 700°C, wobei die Zuspannkräfte in der Größenordnung von 15 kN liegen. Nach einem Abkühlen der Bremsflächentemperatur auf ein Größenordnung von 350°C und einer damit verbundenen Verkleinerung der Bremsflächen, dem sogenannten Belagschrumpfen, liegen die Zuspannkräfte nur noch in der Größenordnung von 9 kN. Dies kann dazu führen, dass das Fahrzeug nicht mehr gegen ein Wegrollen gesichert ist. Wenn man, wie oben beschrieben, die Bremsflächentemperatur beim Abstellen des Fahrzeugs bestimmt hat, ist es dann möglich, im Stillstand des Fahrzeugs ausgehend von der beim Erreichen des Stillstands vorliegenden Bremsflächentemperatur deren Abfall zu ermitteln und dementsprechend die Zuspannkräfte zu erhöhen. Im Allgemeinen folgt der Abfall der Zuspannkräfte beim Abkühlen der Bremsflächen einer Exponentialfunktion, weshalb ein erstmaliges Erhöhen der Zuspannkraft in der Regel bereits nach einer Zeit von etwa 3 Minuten erforderlich ist.

Eine weitere Größe, die beim Betrieb eines Fahrzeugbremssystems berücksichtigt werden kann, ist der Verschleiß von Bremsflächen. Verschleiß von Bremsflächen resultiert - sowohl im Fahrbetrieb als auch im Stillstand eines Kraftfahrzeuges - aus auf diese wirkenden Kräfte. Beim Bremsen werden solche Kräfte durch ein Fahrzeugbremssystem selbsttätig und/oder unter Steuerung eines Fahrzeugführers erzeugt, um eine gewünschte Bremswirkung zu erzielen, d.h. eine gewünschte Menge kinetischer Energie eines Kraftfahrzeugs umzusetzen. Aber auch bei Fahrzuständen, in denen keine durch ein Fahrzeugbremssystem erzeugte Kräfte auf Bremsflächen wirken, d.h. im ungebremsten Fahrbetrieb, können Kräfte an den Bremsflächen auftreten, die zu deren Verschleiß beigetragen. Solche Kräfte können beispielsweise durch Fremdkörper (z.B. Staub, Schmutz, körnige Partikel, Schlamm, etc.) hervorgerufen werden, die sich an einer Bremsfläche anlagern oder zumindest in Wechselwirkung mit dieser treten. Verschleiß einer Bremsfläche kann im ungebremsten Fahrbetrieb auch durch einen "Schlag" der Bremsfläche, d.h. einer Verformung, Unwucht, und dergleichen der Bremsfläche, verursacht werden, aufgrund dessen zumindest auf einzelne Bereiche der Bremsfläche Kräfte wirken, obwohl von dem Fahrzeugbremssystem keine Bremskräfte erzeugt werden.

Da Verschleiß einer Bremsfläche Auswirkungen auf damit erreichbare Bremswirkungen hat, kann eine Verbesserung des Verfahrens für ein Fahrzeugbremssystem erreicht werden, wenn Bremsflächenverschleiß berücksichtigt wird.

Einerseits besteht für eine Bremsfläche zwischen auf sie wirkenden Kräften und daraus resultierendem Verschleiß ein beschreibbarer Zusammenhang, der mathematisch modelliert und/oder empirisch ermittelt gefasst werden kann und beispielsweise in Kennfeldern in der Steuereinheit (ECU) des Fahrzeugs gespeichert sein kann. Je nach Genauigkeit, mit der der Zusammenhang von auf eine Bremsfläche wirkenden Kräften und dem daraus resultierenden Bremsflächenverschleiß wiedergegeben werden soll, können bremsflächenspezifische und/oder fahrzeugspezifische Faktoren, während einer, mehrerer und insbesondere mehrerer aufeinanderfolgender Aktivierungen des Fahrzeugbremssystems sowohl im Fahrbetrieb als auch im Stillstandszustand auf eine Bremsfläche wirkende Maximalkräfte, während eines Zeitraums, insbesondere während einer Aktivierung des Fahrzeugbremssystems in Summe, im Mittel etc. auftretende auf eine Bremsfläche wirkende Kräfte und dergleichen berücksichtigt werden.

Andererseits führen auf eine Bremsfläche wirkende Kräfte zu einer Temperaturänderung derselben.

Dementsprechend ist es möglich zur Ermittlung des Verschleißes einer Bremsfläche eine Beschreibung zu verwenden, die den Zusammenhang zwischen Verschleiß und einer Temperatur bzw. Temperaturänderung der Bremsfläche wiedergibt. Diese Vorgehensweise hat den Vorteil, dass nicht nur Temperaturänderungen einer Bremsfläche aufgrund von auf sie wirkenden Kräften sondern auch aufgrund anderer Einflüsse berücksichtigt werden können. Solche Temperatureffekte können angesichts von möglichen Bremsflächentemperaturen von bis zu 750 Grad Celsius und darüber unter normalen Betriebsbedingungen als vernachlässigbar eingestuft werden. Wenn das Fahrzeug allerdings unter extremen Umgebungstemperaturen (z.B. in der Wüste, in der Arktis oder Antarktis, in Minen oder unter Tage) betrieben wird, können auch diese Temperatureffekte nachweisbar zum Verschleiß einer Bremsfläche führen.

Wie oben ausgeführt, wird die Temperatur einer Bremsfläche ermittelt, um in Abhängigkeit derselben Bremskräfte an der Bremsfläche steuern. Folglich liegen Informationen über die Bremsflächentemperatur vor, die zur Ermittlung des Verschleißes der Bremsfläche verwendet werden können. Grundsätzlich reicht es aus, die Temperatur einer Bremsfläche zu kennen, um unter Verwendung eines geeigneten (mathematischen/empirischen) Modells auf deren Verschleiß zu schließen. Die Kenntnis des aktuellen Verschleißzustandes einer Bremsfläche ermöglicht es, alternativ oder ergänzend zu den oben genannten Möglichkeiten die Höhe von Bremskräften an der Bremsfläche verschleißabhängig zu steuern.

Angesichts der zum Teil recht komplexen Modelle, die den temperaturabhängigen Verschleiß einer Bremsfläche beschreiben, wird im Folgenden lediglich aus Gründen der Anschaulichkeit ein Modell zugrundegelegt, bei dem zwischen temperaturabhängigem Verschleiß einer Bremsfläche bei Aktivierungen des Fahrzeugbremssystems (Bremsbetrieb) und temperaturabhängigem Verschleiß ohne Aktivierung des Fahrzeugbremssystems (ungebremstes Fahren) unterschieden wird. Hierfür werden ein Verschleißfaktor $VerFT_{brems}$ zur Ermittlung des Verschleißes bei Aktivierungen des Fahrzeugbremssystems und Verschleißfaktor $VerFT_{unbrems}$ zur Ermittlung des Verschleißes ohne Aktivierungen des Fahrzeugbremssystems verwendet.

Der Verschleiß $BrVer(T)$ einer Bremsfläche in Abhängigkeit von deren Temperatur $T$ kann dann für eine Aktivierung des Fahrzeugbremssystems wie folgt ermittelt werden:

$$BrVer(T) = F_{brems}(T) * F(VerFT_{brems}),$$

wobei die Funktion $F_{brems}(T)$ angeben kann, dass zur Verschleißberechnung eine (maximale) Temperatur, eine Temperaturänderung, eine gemittelte Temperatur, ein Temperaturverlauf, Temperaturgradienten, ein Integral über die während einer Aktivierung des Fahrzeugbremssystems sowohl im Fahrbetrieb als auch im Stillstand auftretenden Temperaturen oder -änderungen und dergleichen verwendet wird (werden).

Die Funktion $F(VerFT_{brems})$ kann beispielsweise eine Multiplikation mit oder eine Division durch den Verschleißfaktor $VerFT_{brems}$ und/oder eine lineare oder nicht lineare Berücksichtigung des Verschleißfaktor $VerFT_{brems}$ (z.B. eine Potenz- oder Exponentialfunktion) angeben. Dies gilt auch für die im Folgenden genannten Verschleißfaktoren betreffenden Funktionen.

Ohne Aktivierung des Fahrzeugbremssystems kann der Verschleiß $BrVer(T)$ einer Bremsfläche in Abhängigkeit von deren Temperatur T wie folgt bestimmt werden:

$$BrVer(T) = F_{unbrems}(T) * F(VerFT_{unbrems}),$$

wobei die Funktion $F_{unbrems}(T)$ angeben kann, dass zur Verschleißberechnung eine (maximale) Temperatur, eine Temperaturänderung, eine gemittelte Temperatur, ein Temperaturverlauf, Temperaturgradienten, ein Integral über die während eines vorbestimmten Zeitraums (z.B. zwischen aufeinanderfolgenden Aktivierungen des Fahrzeugbremssystems) auftretenden Temperaturen bzw. -änderungen und dergleichen verwendet wird (werden).

Wie oben beschrieben, ist es vorgesehen, die Temperatur der Bremsfläche in Abhängigkeit einer Änderung der kinetischen Energie des Fahrzeugs aufgrund einer Aktivierung des Fahrzeugbremssystems zu bestimmen. Folglich ist es auch möglich, den Verschleiß einer Bremsfläche aus einer Änderung der kinetischen Energie des Fahrzeugs zu ermitteln. Im Folgenden wird auch hier zwischen einem Verschleiß bei einer Aktivierung des Fahrzeugbremssystems und einem Verschleiß ohne Aktivierung des Fahrzeugbremssystems unterschieden. Für den ersten Fall wird ein Verschleißfaktor $VerFW_{brems}$ zur Ermittlung der Verschleißes bei Aktivierung des Fahrzeugbremssystems verwendet.

Der Verschleiß $BrVer(W_{kin})$ einer Bremsfläche in Abhängigkeit von Änderungen der kinetischen Energie $W_{kin}$ des Fahrzeugs kann dann für eine Aktivierung des Fahrzeugbremssystems wie folgt ermittelt werden:

$$BrVer(W_{kin}) = F_{brems}(W_{kin}) * F(VerFW_{brems}),$$

wobei die Funktion $F_{brems}(W_{kin})$ angeben kann, dass zur Verschleißberechnung eine (maximale) Änderung der kinetischen Energie, eine gemittelte Änderung der kinetischen Energie, ein Verlauf der Änderung der kinetischen Energie, Gradienten von Änderungen der kinetischen Energie, ein Integral über die während einer Aktivierung des Fahrzeugbremssystems sowohl im Fahrbetrieb als auch im Stillstand auftretenden Änderung der kinetischen Energie und dergleichen verwendet wird (werden). Zur Berechnung der kinetischen Energie des Fahrzeugs bzw. deren Änderung wird auf die oben gemachten Ausführungen verwiesen.

Da sich im Allgemeinen ohne Aktivierung des Fahrzeugbremssystems die kinetische Energie des Fahrzeugs nicht ändert, ist es vorteilhaft, die Ermittlung des Verschleißes einer Bremsfläche, wie oben beschrieben, in Abhängigkeit von deren Temperatur durchzuführen. Als Alternative zu dieser Bestimmung des Verschleißes einer Bremsfläche kann - sowohl in Kombination mit einer temperaturabhängigen Verschleißermittlung als auch in Kombination mit einer Verschleißermittlung in Abhängigkeit von Änderungen der kinetischen Energie des Fahrzeugs bei aktiviertem Fahrzeugbremssystem - ein Betriebszustand des Fahrzeugs zugrundegelegt werden. So kann z B. die Kilometerleistung(Fahrleistung) und/oder Geschwindigkeit des Fahrzeugs berücksichtigt werden, da sich auch ohne Aktivierung des Fahrzeugbremssystems der Verschleiß einer Bremsfläche erhöht, je länger das Fahrzeug bewegt wird und/oder je höher die Fahrzeuggeschwindigkeit ist. Hierbei wird ein Verschleißfaktor $VerFBz_{unbrems}$ zur Ermittlung des Verschleißes ohne Aktivierung des Fahrzeugbremssystems verwendet. Der Verschleiß $BrVer(Bz)$ einer Bremsfläche in Abhängigkeit vom Betriebszustand des Fahrzeugs kann dann wie folgt bestimmt werden:

$$BrVer(Bz) = F_{unbrems}(Bz) * F(VerFBz_{unbrems}),$$

wobei die Funktion $F_{unbrems}(Bz)$ angeben kann, dass zur Verschleißberechnung die aktuelle Gesamtkilometerleistung des Fahrzeugs, eine Kilometerleistung während eines vorbestimmten Zeitraums (z.B. zwischen aufeinanderfolgender Aktivierungen des Fahrzeugbremssystems oder nach einer Wartung oder einem Austausch der Bremsfläche), die aktuelle Geschwindigkeit des Fahrzeugs, eine gemittelte Geschwindigkeit, ein Geschwindigkeitsverlauf, Geschwindigkeitsgradienten, ein Integral über die während eines vorbestimmten Zeitraums (z.B. zwischen aufeinanderfolgenden Aktivierungen des Fahrzeugbremssystems) auftretenden Geschwindigkeiten bzw. - änderungen und dergleichen verwendet wird (werden).

Als konkretes Beispiel für eine Verschleißbestimmung einer Bremsfläche in Abhängigkeit von Änderungen der kinetischen Energie des Fahrzeugs wird, vergleichbar zu der oben erläuterten Berechnung der thermischen Energie einer Bremsfläche, die ermittelte kinetische Energie des Fahrzeugs summiert, um daraus unter Berücksichtigung eines für eine Aktivierungen des Fahrzeugbremssystems vorgesehenen Verschleißfaktors den Verschleiß zu berechnen. So kann z.B. der Verschleiß $BrVer(W_{kin})$ einer Bremsfläche bei Aktivierung des Fahrzeugbremssystems wie folgt ermittelt werden:

$$BrVer(W_{kin}) = \Sigma\ (W_{kin})\ /\ F(VerFW_{brems}),$$

wobei der Verschleißfaktor empirisch ermittelt und vorteilhafterweise in Form von Kennfeldern in der Steuereinheit (ECU) des Fahrzeugs sein kann. Durchgeführte experimentelle Überprüfungen für dieses Beispiel haben ergeben, dass bei einer Aktivierung des Fahrzeugbremssystems der Bremsflächenverschleiß zwischen 0,5 und 2 $\mu$m/kJ liegt.

Als konkretes Beispiel für eine Verschleißbestimmung einer Bremsfläche in Abhängigkeit von Betriebszuständen des Fahrzeugs wird dessen Fahrleistung in Kilometern verwendet und mit dem entsprechenden Verschleißfaktor multipliziert:

$$BrVer(Bz) = (Kilometer) * F(VerFBz_{unbrems}),$$

wobei auch hier der Verschleißfaktor empirisch ermittelt und vorteilhafterweise in Form von Kennfeldern in der Steuereinheit (ECU) des Fahrzeugs sein kann. Durchgeführte experimentelle Überprüfungen für dieses Beispiel haben ergeben, dass ohne Aktivierung des Fahrzeugbremssystems der Bremsflächenverschleiß bei etwa 0,3 mm pro 10.000 km Fahrleistung liegt.

**Patentansprüche**

1. Verfahren für ein Fahrzeugbremssystem, bei dem die Temperatur einer Bremsfläche (BD) in Abhängigkeit einer Verzögerung oder einer Beschleunigung bei aktiviertem Fahrzeugbremssystem (BS) bestimmt wird, und die Höhe von Bremskräften auf die Bremsfläche (BD) aufgrund einer Aktivierung des Fahrzeugbremssystems (BS) in Abhängigkeit der Temperatur der Bremsfläche (BD) gesteuert wird, mit folgenden Schritten:

   - Erzeugen von Bremskräften an der Bremsfläche (BD), um einen gewünschten Fahrzustand für das Fahrzeug zu erreichen oder beizubehalten,
   - Bestimmen der Temperatur der Bremsfläche (BD),
   - Bestimmen der Bremskräfte an der Bremsfläche (BD),
   - Ermitteln einer Temperaturänderung der Bremsfläche (BD), und
   - Steuern der Höhe der Bremskräfte an der Bremsfläche (BD), wenn die Bremskräfte aufgrund der Temperaturänderung der Bremsfläche nicht geeignet sind, den gewünschten Fahrzustand für das Fahrzeug zu erreichen oder beizubehalten,

   **dadurch gekennzeichnet, dass**

   - die temperaturabhängige Steuerung der Bremskräfte außer Kraft gesetzt wird, so dass keine Bremskräfte an den Bremsflächen erzeugt werden, wenn der gewünschte Fahrzustand durch eine Reduktion der Motorleistung des Fahrzeugs und/oder durch Lenkbewegungen eines Fahrzeugführers ohne Aktivierung des Fahrzeugbremssystems erreicht oder beibehalten werden kann.

2. Verfahren nach Anspruch 1, bei dem beim Steuern der Bremskrafthöhe nur die Höhe von vom Fahrer selbst erzeugten Bremskräften gesteuert wird.

**3.** Verfahren gemäß Anspruch 1 oder 2, bei dem die Höhe von vom Fahrer im Fahrbetrieb erzeugten Bremskräften gesteuert wird.

**4.** Verfahren gemäß einem der Ansprüche 1 bis 3, bei dem das Steuern der Höhe der Bremskräfte an der Bremsfläche (BD) in Abhängigkeit der Temperaturänderung der Bremsfläche (BD) und des gewünschten Fahrzustandes für das Fahrzeug durchgeführt wird.

**5.** Verfahren gemäß einen der vorherigen Ansprüche, bel dem die Temperaturänderung der Bremsfläche (BD) durch wenigstens zweimal wiederholtes Bestimmen der Temperatur der Bremsfläche (BD) ermittelt wird.

**6.** Verfahren gemäß einem der vorherigen Ansprüche, bei dem die Temperaturänderung der Bremsfläche (BD) in Abhängigkeit einer thermischen Energie ermittelt wird, die die Bremsfläche (BD) im Stillstand des Fahrzeuges abgibt.

**7.** Verfahren gemäß einem der vorherigen Ansprüche, bei dem die Temperatur der Bremsfläche (BD) in Abhängigkeit einer Verzögerung oder Beschleunigung des Fahrzeugs und/oder in Abhängigkeit einer Verzögerung oder Beschleunigung eines entsprechenden Rades des Fahrzeugs bestimmt wird.

**8.** Verfahren gemäß einem der vorherigen Ansprüche, bei dem die Temperatur der Bremsfläche (BD) in Abhängigkeit der Dauer bestimmt wird, für die das Fahrzeugbremssystem aktiviert ist.

**9.** Verfahren gemäß einem der vorherigen Ansprüche, bei dem die Temperatur der Bremsfläche (BD) in Abhängigkeit einer Änderung der kinetischen Energie des Fahrzeugs aufgrund der Aktivierung des Fahrzeugsbremssystems und/oder in Abhängigkeit der kinetischen Energie des Rades bei aktiviertem Fahrzeugbremssystem bestimmt wird.

**10.** Verfahren gemäß einem der vorherigen Ansprüche, bei dem die Temperatur der Bremsfläche (BD) in Abhängigkeit von thermischer Energie bestimmt wird, die der Bremsfläche (BD) im Wesentlichen unabhängig von der Aktivierung des Fahrzeugbremssystems zugeführt wird.

**11.** Verfahren gemäß einem der vorherigen Ansprüche, bei dem die Temperatur der Bremsfläche (BD) in Abhängigkeit einer thermischen Energie bestimmt wird, die die Bremsfläch (BD) abgibt.

**12.** Verfahren gemäß einem der vorherigen Ansprüche, mit folgenden Schritten:

- Ermitteln einer Geschwindigkeit des Fahrzeugs beim Aktivieren des Fahrzeugbremssystems (BS),
- Ermitteln einer Verzögerung oder Beschleunigung bei aktiviertem Fahrzeugbremssystem (BS),
- Bestimmen einer ersten kinetischen Energie unter Verwendung der ermittelten Geschwindigkeit,
- Bestimmen einer zweiten kinetischen Energie unter Verwendung der ermittelten Verzögerung oder Beschleunigung,
- Vergleichen der ersten und der zweiten kinetischen Energie,
- Bestimmen einer thermischen Energie aus dem Vergleich der ersten und der zweiten kinetischen Energie, die die der Bremsfläche (BD) zugeführte thermische Energie angibt, und
- Bestimmen der Temperatur der Bremsfläche (BD) in Abhängigkeit der der Bremsfläche (BD) zugeführten thermischen Energie.

**13.** Verfahren gemäß Anspruch 12, mit folgenden Schritten:

- Ermitteln einer Dauer, die die Aktivierungsdauer des Fahrzeugbremssystems (BS) angibt, und
- Ermitteln der zweiten kinetischen Energie unter Verwendung der ermittelten Aktivierungsdauer.

**14.** Verfahren nach einem der vorherigen Ansprüche, mit folgenden Schritten:

- Ermitteln eines Verschleißes der Bremsfläche (BD) basierend auf der Temperatur und/oder der Temperaturänderung der Bremsfläche (BD), und
- Steuern der Höhe der Bremskräfte an der Bremsfläche (BD) in Abhängigkeit des Verschleißes.

**15.** Verfahren nach einem der vorherigen Ansprüche, mit folgenden Schritten:

- Ermitteln eines Verschleißes der Bremsfläche (BD) basierend auf einer Änderung der kinetischen Energie des Fahrzeugs, und
- Steuern der Höhe der Bremskräfte an der Bremsfläche (BD) in Abhängigkeit des Verschleißes.

16. Verfahren nach Anspruch 14 oder 15, bei dem zum Ermitteln des Verschleißes ein Verschleißfaktor verwendet wird.

17. Verfahren nach einem der Ansprüche 14 bis 16, bei dem ein Verschleißfaktor verwendet wird.

18. Vorrichtung für ein Fahrzeugbremssystem (BS), mit:

- Einrichtungen (TEMP, MEM) zur Bestimmung der Temperatur einer Bremsfläche (BD) in Abhängigkeit einer Verzögerung oder einer Beschleunigung bei aktiviertem Fahrzeugbremssystem (BS), und
- Einrichtungen (BS, ECU, MEM) zur Steuerung der Höhe von Bremskräften auf die Bremsfläche (BD) aufgrund einer Aktivierung des Fahrzeugbremssystems (BS) in Abhängigkeit der Temperatur der Bremsfläche (BD), wobei
- die Steuerungseinrichtungen (BS, ECU, MEM) eingerichtet und programmiert sind, die Bremskräfte zum Erreichen oder Beibehalten eines gewünschten Fahrzustandes für das Fahrzeug zu steuern,

**dadurch gekennzeichnet, dass**

- die Steuerungseinrichtungen (BS, ECU, MEM) eingerichtet und programmiert sind, die temperaturabhängige Steuerung der Bremskräfte außer Kraft zu setzen, so dass keine Bremskräfte an den Bremsflächen erzeugt werden, wenn der gewünschte Fahrzustand durch eine Reduktion der Motorleistung des Fahrzeugs und/oder durch Lenkbewegungen eines Fahrzeugführers ohne Aktivierung des Fahrzeugbremssystems erreicht oder beibehalten werden kann.

19. Vorrichtung gemäß Anspruch 18, **dadurch gekennzeichnet, dass** die Steuerungseinrichtungen (BS, ECU, MEM) eingerichtet und programmiert sind, nur die vom Fahrer erzeugten Bremskräfte zu steuern.

20. Vorrichtung gemäß Anspruch 18 oder 19, **dadurch gekennzeichnet, dass** die Steuerungseinrichtungen (BS, ECU, MEM) eingerichtet und programmiert sind, nur die vom Fahrer im Fahrbetrieb erzeugten Bremskräfte zu steuern.

21. Vorrichtung gemäß einem der Ansprüche 18 bis 20, **dadurch gekennzeichnet, dass** die Einrichtungen (TEMP) zur Bestimmung der Temperatur der Bremsfläche (BD) und/oder die Steuerungseinrichtungen (BS, ECU, MEM), dazu eingerichtet und programmiert sind, die Schritte gemäß einem der Ansprüche 1 bis 18 durchzuführen.

22. Vorrichtung gemäß einem der Ansprüche 18 bis 21, **gekennzeichnet durch** einen Speicher (MEM) mit Daten zur Durchführung der Schritte gemäß einem der Ansprüche 1 bis 17.

23. Vorrichtung gemäß einem der Ansprüche 18 bis 22, **gekennzeichnet durch** eine Schnittstelle, um zur Bestimmung der Bremsflächentemperatur und/oder zur Steuerung der Bremskräfte geeignete Daten von Steuereinrichtungen (BS, ECU) und/oder Erfassungseinrichtungen eines Fahrzeuges zu erhalten.

24. Fahrzeugbremssystem (BS), mit:

der Vorrichtung gemäß einem der Ansprüche 18 bis 23.

25. Fahrzeugbremssystems (BS) gemäß Anspruch 24, mit einem Speichermedium mit Daten zur Steuerung des Fahrzeugbremssystems (BS) gemäß den Schritten gemäß einem der Ansprüche 1 bis 17.

26. Verfahren mit folgenden Schritten:

- Bereitstellen eines Speichermediums mit Daten zur Durchführung der Schritte gemäß einem der Ansprüche 1 bis 17,
- Übertragen der Daten des Speichermediums zu einer Einrichtung (TEMP, ECU, BS, MEM) eines Fahrzeuges zur Steuerung dessen Fahrzeugbremssystems (BS) oder der Vorrichtung gemäß einen der Ansprüche 18 bis 24 oder zu dem Speichermedium des Fahrzeugbremssystems (BS) gemäß Anspruch 25, und
- Ausführen der Schritte gemäß einem der Ansprüche 1 bis 17 zum entsprechenden Betrieb des Fahrzeugbremssystems (BS) in Abhängigkeit der Temperatur der wenigstens einen Bremsfläche (BD).

**Claims**

1. Method for a vehicle brake system, wherein the temperature of a brake surface (BD) is determined in dependence upon a deceleration or an acceleration in the activated state of the vehicle brake system (BS), and the level of braking forces upon the brake surface (BD) caused by an activation of the vehicle brake system (BS) is controlled in dependence upon the temperature of the brake surface (BD), comprising the following steps:

   - generate braking forces at the brake surface (BD) in order to achieve or maintain a desired driving state for the vehicle,
   - determine the temperature of the brake surface (BD),
   - determine the braking forces at the brake surface (BD),
   - determine a temperature change of the brake surface (BD), and
   - control the level of the braking forces at the brake surface (BD) if because of the temperature change of the brake surface the braking forces are not suitable to achieve or maintain the desired driving state for the vehicle.

   **characterized in that**

   - the temperature-dependent control of the braking forces is made ineffective so that no braking forces are generated at the brake surfaces if the desired driving state can be achieved or maintained by a reduction of the engine output of the vehicle and/or by steering movements of a vehicle driver without activating the vehicle brake system.

2. Method according to claim 1, wherein when controlling the braking force level only the level of braking forces generated by the driver himself is controlled.

3. Method according to claim 1 or 2, wherein the level of braking forces generated by the driver during vehicle operation is controlled.

4. Method according to one of claims 1 to 3, wherein control of the level of the braking forces at the brake surface (BD) is effected in dependence upon the temperature change of the brake surface (BD) and the desired driving state for the vehicle.

5. Method according to one of the preceding claims, wherein the temperature change of the brake surface (BD) is determined by repeating the determination of the temperature of the brake surface (BD) at least twice.

6. Method according to one of the preceding claims, wherein the temperature change of the brake surface (BD) is determined in dependence upon a thermal energy released by the brake surface (BD) in the stationary state of the vehicle.

7. Method according to one of the preceding claims, wherein the temperature of the brake surface (BD) is determined in dependence upon a deceleration or acceleration of the vehicle and/or in dependence upon a deceleration or acceleration of a corresponding wheel of the vehicle.

8. Method according to one of the preceding claims, wherein the temperature of the brake surface (BD) is determined in dependence upon the length of time for which the vehicle brake system is activated.

9. Method according to one of the preceding claims, wherein the temperature of the brake surface (BD) is determined in dependence upon a change of the kinetic energy of the vehicle caused by the activation of the vehicle brake system and/or in dependence upon the kinetic energy of the wheel in the activated state of the vehicle brake system.

10. Method according to one of the preceding claims, wherein the temperature of the brake surface (BD) is determined in dependence upon thermal energy, which is supplied to the brake surface (BD) substantially independently of the activation of the vehicle brake system.

11. Method according to one of the preceding claims, wherein the temperature of the brake surface (BD) is determined in dependence upon a thermal energy released by the brake surface (BD).

12. Method according to one of the preceding claims comprising the following steps:

- determine a velocity of the vehicle upon activation of the vehicle brake system (BS);
- determine a deceleration or acceleration in the activated state of the vehicle brake system (BS);
- determine a first kinetic energy using the determined velocity;
- determine a second kinetic energy using the determined deceleration or acceleration;
- compare the first and the second kinetic energy;
- determine from the comparison of the first and the second kinetic energy a thermal energy, which indicates the thermal energy supplied to the brake surface (BD), and
- determine the temperature of the brake surface (BD) in dependence upon the thermal energy supplied to the brake surface (BD).

13. Method according to claim 12, comprising the following steps:

- determine a period, which indicates the period of activation of the vehicle brake system (BS), and
- determine the second kinetic energy using the determined period of activation.

14. Method according to one of the preceding claims, comprising the following steps:

- determine a wear of the brake surface (BD) on the basis of the temperature and/or the temperature change of the brake surface (BD), and
- control the level of the braking forces at the brake surface (BD) in dependence upon the wear.

15. Method according to one of the preceding claims, comprising the following steps:

- determine a wear of the brake surface (BD) on the basis of a change of the kinetic energy of the vehicle, and
- control the level of the braking forces at the brake surface (BD) in dependence upon the wear.

16. Method according to claim 14 or 15, wherein a wear factor is used for determining the wear.

17. Method according to one of claims 14 to 16, wherein a wear factor is used.

18. Apparatus for a vehicle brake system (BS), comprising:

- devices (TEMP, MEM) for determining the temperature of a brake surface (BD) in dependence upon a deceleration or an acceleration in the activated state of the vehicle brake system (BS), and
- devices (BS, ECU, MEM) for controlling the level of braking forces upon the brake surface (BD) caused by an activation of the vehicle brake system (BS) in dependence upon the temperature of the brake surface (BD),

wherein

- the control devices (BS, ECU, MEM) are devised and programmed to control the braking forces in order to achieve or maintain a desired driving state for the vehicle,

**characterized in that**
the control devices (BS, ECU, MEM) are devised and programmed to make the temperature-responsive control of the braking forces ineffective so that no braking forces are generated at the brake surfaces if the desired driving state can be achieved or maintained by a reduction of the engine output of the vehicle and/or by steering movements of a vehicle driver without activating the vehicle brake system.

19. Apparatus according to claim 18, **characterized in that** the control devices (BS, ECU, MEM) are devised and programmed to control only the braking forces generated by the driver.

20. Apparatus according to claim 18 or 19, **characterized in that** the control devices (BS, ECU, MEM) are devised and programmed to control only the braking forces generated by the driver during vehicle operation.

21. Apparatus according to one of claims 18 to 20, **characterized in that** the devices (TEMP) for determining the temperature of the brake surface (BD) and/or the control devices (BS, ECU, MEM) are devised and programmed to execute the steps according to one of claims 1 to 18.

22. Apparatus according to one of claims 18 to 21 **characterized by** a memory (MEM) having data for executing the steps according to one of claims 1 to 17.

23. Apparatus according to one of claims 18 to 22, **characterized by** an interface for receiving from control devices (BS, ECU) and/or detection devices of a vehicle data suitable for determining the brake surface temperature and/or for controlling the braking forces.

24. Vehicle brake system (BS), comprising:

   the apparatus according to one of claims 18 to 23.

25. Vehicle brake system (BS) according to claim 24, comprising a storage medium having data for controlling the vehicle brake system (BS) in accordance with the steps according to one of claims 1 to 17.

26. Method comprising the following steps:

   - provide a storage medium with data for executing the steps according to one of claims 1 to 17,
   - transfer the data of the storage medium to a device (TEMP, ECU, BS, MEM) of a vehicle for controlling its vehicle brake system (BS) or the apparatus according to one of claims 18 to 24 or to the storage medium of the vehicle brake system (BS) according to claim 25, and
   - execute the steps according to one of claims 1 to 17 for the corresponding operation of the vehicle brake system (BS) in dependence upon the temperature of the at least one brake surface (BD).

**Revendications**

1. Procédé pour un système de freinage de véhicule dans lequel la température d'une surface de frein (BD) est déterminée en fonction d'une décélération ou d'une accélération pendant que le système de freinage du véhicule (BS) est activé, et dans lequel le niveau des forces de freinage exercées sur la surface de frein (BD) sous l'effet d'une activation du système de freinage de véhicule (BS) est commandé en fonction de la température de la surface de frein (BD), comprenant les étapes suivantes :

   - produire des forces de freinage au niveau de la surface de frein (BD) pour atteindre ou maintenir un état de marche souhaité pour le véhicule,
   - déterminer la température de la surface de frein (BD),
   - déterminer les forces de freinage au niveau de la surface de frein (BD),
   - déterminer une variation de la température de la surface de frein (BD), et
   - commander le niveau des forces de freinage au niveau de la surface de frein (BD) lorsque, sous l'effet de la variation de la température de la surface de frein (BD), les forces de freinage ne sont pas appropriées pour atteindre ou maintenir l'état de marche souhaité pour le véhicule,

   **caractérisé en ce que**
   la commande des forces de freinage en fonction de la température est mise hors d'action de manière qu'aucune force de freinage ne soit produite au niveau des surfaces de freins lorsque l'état de marche souhaité peut être atteint ou maintenu par une réduction de la puissance du moteur du véhicule et/ou par des mouvements de direction d'un conducteur du véhicule sans activation du système de freinage de véhicule.

2. Procédé selon la revendication 1, dans lequel, dans le cas de la commande du niveau des forces de freinage, seul le niveau des forces de freinage produites par le conducteur lui-même est commandé.

3. Procédé selon la revendication 1 ou 2, dans lequel le niveau de forces de freinage produites par le conducteur pendant la marche est commandé.

4. Procédé selon une des revendications 1 à 3, dans lequel la commande du niveau des forces de freinage au niveau de la surface de frein (BD) est exécutée en fonction de la variation de la température de la surface de frein (BD) et de l'état de marche souhaité pour le véhicule.

5. Procédé selon une des revendications précédentes, dans lequel la variation de la température de la surface de frein (BD) est déterminée par une détermination répétée au moins deux fois de la température de la surface de frein (BD).

6. Procédé selon une des revendications précédentes, dans lequel la variation de la température de la surface de frein (BD) est déterminée en fonction d'une énergie thermique que la surface de frein (BD) cède à l'état d'arrêt du véhicule.

7. Procédé selon une des revendications précédentes, dans lequel la température de la surface de frein (BD) est déterminée en fonction d'une décélération ou accélération du véhicule et/ou en fonction d'une décélération ou accélération d'une roue correspondante du véhicule.

8. Procédé selon une des revendications précédentes, dans lequel la température de la surface de frein (BD) est déterminée en fonction de la durée pendant laquelle le système de freinage de véhicule est activé.

9. Procédé selon une des revendications précédentes, dans lequel la température de la surface de frein (BD) est déterminée en fonction d'une variation de l'énergie cinétique du véhicule résultant de l'activation du système de freinage de véhicule et/ou en fonction de l'énergie cinétique de la roue pendant que le système de freinage de véhicule est activé.

10. Procédé selon une des revendications précédentes, dans lequel la température de la surface de frein (BD) est déterminée en fonction de l'énergie thermique qui est apportée à la surface de frein (BD) sensiblement indépendamment de l'activation du système de freinage de véhicule.

11. Procédé selon une des revendications précédentes, dans lequel la température de la surface de frein (BD) est déterminée en fonction d'une énergie thermique que la surface de frein (BD) cède.

12. Procédé selon une des revendications précédentes, comprenant les étapes suivantes :

- déterminer une vitesse du véhicule pendant l'activation du système de freinage de véhicule (BS),
- déterminer une décélération ou accélération pendant que le système de freinage de véhicule (BS) est activé,
- déterminer une première énergie cinétique à l'aide de la vitesse déterminée,
- déterminer une deuxième énergie cinétique à l'aide de la décélération ou accélération déterminée,
- comparer les première et deuxième énergies cinétiques,
- déterminer sur la base de la comparaison des première et deuxième énergies cinétiques une énergie thermique qui indique l'énergie thermique apportée à la surface de frein (BD), et
- déterminer la température de la surface de frein (BD) en fonction de l'énergie thermique apportée à la surface de frein (BD).

13. Procédé selon la revendication 12, comprenant les étapes suivantes :

- déterminer une durée qui indique la durée d'activation du système de freinage de véhicule (BS), et
- déterminer la deuxième énergie cinétique à l'aide de la durée d'activation déterminée.

14. Procédé selon une des revendications précédentes, comprenant les étapes suivantes :

- déterminer une usure de la surface de frein (BD) en se basant sur la température et/ou la variation de température de la surface de frein (BD), et
- commander le niveau des forces de freinage au niveau de la surface de frein (BD) en fonction de l'usure.

15. Procédé selon une des revendications précédentes, comprenant les phases suivantes :

- déterminer une usure de la surface de frein (BD) en se basant sur une variation de l'énergie cinétique du véhicule, et
- commander le niveau des forces de freinage au niveau de la surface de frein (BD) en fonction de l'usure.

16. Procédé selon la revendication 14 ou 15, dans lequel on utilise un coefficient d'usure pour déterminer l'usure.

17. Procédé selon une des revendications 14 à 16, dans lequel on utilise un coefficient d'usure.

18. Dispositif pour un système de freinage de véhicule (BS), comprenant :

- des dispositifs (TEMP, MEM) pour déterminer la température d'une surface de frein (BD) en fonction d'une décélération ou d'une accélération pendant que le système de freinage de véhicule (BS) est activé, et
- des dispositifs (BS, ECU, MEM) pour commander le niveau de forces de freinage sur la surface de frein (BD) résultant d'une activation du système de freinage de véhicule (BS) en fonction de la température de la surface de frein (BD),

dans lequel

- les dispositifs de commande (BS, ECU, MEM) sont construits et programmés pour commander les forces de freinage nécessaires pour atteindre ou maintenir un état de marche souhaité pour le véhicule,

**caractérisé en ce que**

- les dispositifs de commande (BS, ECU, MEM) sont agencés et programmés pour mettre hors d'action la commande des forces de freinage en fonction de la température de manière qu'aucune force de freinage ne soit produite au niveau des surfaces de freins lorsque l'état de marche souhaité peut être atteint ou maintenu par une réduction de la puissance du moteur du véhicule et/ou par des mouvements de direction d'un conducteur du véhicule sans activation du système de freinage de véhicule.

**19.** Dispositif selon la revendication 18, **caractérisé en ce que** les dispositifs de commande (BS, ECU, MEM) sont agencés et programmés pour commander uniquement les forces de freinage produites par le conducteur.

**20.** Dispositif selon la revendication 18 ou 19, **caractérisé en ce que** les dispositifs de commande (BS, ECU, MEM) sont agencés et programmés pour commander uniquement les forces de freinage produites par le conducteur dans l'état de marche.

**21.** Dispositif selon une des revendications 18 à 20, **caractérisé en ce que** les dispositifs (TEMP) pour la détermination de la température de la surface de frein (BD) et/ou les dispositifs de commande (BS, ECU, MEM) sont agencés et programmés pour exécuter les étapes selon une des revendications 1 à 18.

**22.** Dispositif selon une des revendications 18 à 21, **caractérisé par** une mémoire (MEM) contenant des données pour l'exécution des phases selon une des revendications 1 à 17.

**23.** Dispositif selon une des revendications 18 à 22, **caractérisé par** une interface destinée à recevoir en provenance des dispositifs de commande (BS, ECU) et/ou de dispositifs de détection d'un véhicule des données appropriées pour la détermination de la température de la surface de frein et/ou pour la commande des forces de freinage.

**24.** Système de freinage de véhicule (BS) comprenant :

le dispositif selon une des revendications 18 à 23.

**25.** Système de freinage de véhicule (BS) selon la revendication 24, comprenant un milieu de mémoire contenant des données servant pour commander le système de freinage du véhicule (BS) conformément aux étapes selon une des revendications 1 à 17.

**26.** Procédé comprenant les phases suivantes :

- préparer un milieu de mémoire contenant des données servant pour l'exécution des phases selon une des revendications 1 à 17,
- transmettre les données du milieu de mémoire à un dispositif (TEMP, ECU, BS, MEM) d'un véhicule pour la commande du système de freinage (BS) de ce véhicule ou du dispositif selon une des revendications 18 à 24, ou au milieu de mémoire du système de freinage de véhicule (BS) selon la revendication 25 et
- exécuter les étapes selon une des revendications 1 à 17 pour assurer le fonctionnement approprié du système de freinage de véhicule (BS) en fonction de la température de la au moins une surface de frein (BD).

**Fig. 1**